# EUROPÄISCHE PATENTANMELDUNG

(11) **EP 1 978 290 A1**
(43) Veröffentlichungstag der Anmeldung: **08.10.2008**
(21) Anmeldenummer: 07021859.9
(22) Anmeldetag: 10.11.2007
(51) Int. Cl.: F16L 37/56, F16L 33/22

(54) **Vorrichtung zum Anschliessen einer röhrenartigen Leitung, insbesondere einer Schlauchleitung, an ein Anschlussstück**

(30) Priorität: 05.04.2007 DE 102007017974
(71) Anmelder: Eisele Pneumatics GmbH, 71332 Waiblingen (DE)
(72) Erfinder: Amler, Ralf, 72663 Großbettlingen (DE); Gabriel, Jürgen, 73663 Berglen (DE); Harsch, Klaus, 71364 Winnenden (DE); Müller, Bernhard, 71397 Leutenbach (DE)
(74) Vertreter: Bartels & Partner

(57) **Zusammenfassung**

Die Erfindung betrifft eine Vorrichtung (1) zum Anschließen einer röhrenartigen Leitung (50), insbesondere einer Schlauchleitung, an ein Anschlussstück (2), wobei die Vorrichtung (1) ein Betätigungselement (10) und ein Klemmelement (12, 14) zum lösbaren Klemmen der anzuschließenden Leitung (50)aufweist, dadurch gekennzeichnet, dass das Betätigungselement (10) ein Verschlussmittel (22, 24) aufweist, das zusammen mit einem korrespondierenden Verschlussmittel (28) des Anschlussstücks (2) einen Bajonettverschluss bildet, und dass durch Drehen des Betätigungselements (10) der Bajonettverschluss schließbar ist und dabei das Klemmelement (12, 14) in klemmende Anlage an die anzuschließende Leitung (50) bringbar ist.

## Beschreibung

Die Erfindung betrifft eine Vorrichtung zum Anschließen einer röhrenartigen Leitung, insbesondere einer Schlauchleitung, an ein Anschlussstück gemäß dem Oberbegriff des Anspruches 1. Derartige Vorrichtungen werden beispielsweise zum Verbinden einer Schlauchleitung mit einer weiterführenden Leitung oder mit einem Gerät oder einer Maschine eingesetzt.

Aus der DE 100 26 464 A1 ist eine solche Anschlussvorrichtung im Zusammenhang mit einer Verbindungsvorrichtung bekannt, wobei die Anschlussvorrichtung eine Drehhülse aufweist, die auf ein Anschlussstück aufschraubbar ist. Für zahlreiche Anwendungen ist eine solche Schraubverbindung vorteilhaft oder sogar erforderlich, um ein mechanisch festes Anschließen der Leitung zu gewährleisten. Insbesondere bei Anwendungen, bei denen die Anschlussstelle schwer zugänglich ist, etwa weil zahlreiche Leitungen angeschlossen werden und dementsprechend zahlreiche Anschlussvorrichtungen vorzusehen sind, erfordert das Anschließen mittels einer Drehverbindung einen erhöhten Aufwand.

Der Erfindung liegt die Aufgabe zugrunde, eine gattungsgemäße Vorrichtung bereitzustellen, welche die Nachteile des Standes der Technik überwindet. In einer Ausführungsart soll die Vorrichtung ein einfaches Anschließen der Leitung auch unter beengten Platzverhältnissen ermöglichen.

Das Problem ist durch die im Anspruch 1 bestimmte Vorrichtung gelöst. Besondere Ausführungsarten der Erfindung sind in den Unteransprüchen bestimmt.

In einer Ausführungsart bildet das Betätigungselement vorzugsweise einstückig Verschlussmittel aus, die Teil eines Bajonett- oder Renkverschlusses sind. Dadurch ist es möglich, durch Drehen des Betätigungselementes beispielsweise um einen Winkel von lediglich 90° die anzuschließende Leitung an dem Anschlussstück festzulegen. In einer Ausführungsart können auch mehrere Verschlussmittel an dem Betätigungselement angeordnet sein, insbesondere zwei oder drei Verschlussmittel in einem Winkelabstand von 180 bzw. 120° angeordnet sein, sodass nicht nur die Verbindung als solche besonders einfach ist, sondern auch der Eingriff der den Bajonettverschluss bildenden Verschlussmittel einfach möglich ist, nämlich durch geringfügiges Drehen des Betätigungselements gegenüber dem Anschlussstück. Gleichzeitig mit dem Schließen des Bajonettverschlusses erfolgt die klemmende Anlage des Klemmelements an die anzuschließende Leitung, sodass ein mechanisch fester und gegebenenfalls auch fluiddichter Anschluss der Leitung gewährleistet ist.

In einer Ausführungsart weist das Betätigungselement einen hülsenförmigen Abschnitt zur Verbindung mit dem Anschlussstück auf, insbesondere ist das Betätigungselement mit dem hülsenförmigen Abschnitt auf das Anschlussstück aufsteckbar. Das den einen Teil des Bajonettverschlusses bildende Verschlussmittel des Betätigungselements kann dabei im Bereich des hülsenförmigen Abschnitts angeordnet sein.

In einer Ausführungsart ist das Verschlussmittel des Betätigungselements als Steuerkurve ausgebildet, beispielsweise als Nut oder Öffnung in der Mantelfläche des hülsenförmigen Abschnitts des Betätigungselements. Mindestens ein Abschnitt der Steuerkurve kann schraubenlinienförmig verlaufen, sodass die Drehbewegung des Betätigungselements jedenfalls teilweise in eine Axialbewegung umsetzbar ist. Die Steuerkurve kann dabei an einem dem Anschlussstück zugewandten Ende des Betätigungselements offen sein für das Einführen des mit dem Verschlussmittel des Betätigungselements korrespondierenden Verschlussmittel des Anschlussstücks, bei dem es sich beispielsweise um einen Stift oder einen Zapfen handeln kann, der vorzugsweise einstückig von dem Anschlussstück ausgebildet ist.

In einer Ausführungsart weist die Vorrichtung mehrere Klemmelemente auf, sodass mehrere an das Anschlussstück anschließbare Leitungen klemmbar sind. Die mehreren Leitungen können in dem Anschlussstück separat weitergeführt werden oder in einer gemeinsamen Sammelleitung.
Die Klemmelemente können identisch aufgebaut sein, insbesondere für anzuschließende Leitungen mit identischen Abmessungen ausgebildet sein, oder es können unterschiedlich dimensionierte Klemmelemente vorgesehen sein, beispielsweise für anzuschließende Leitungen mit verschiedenen Durchmessern.

In einer Ausführungsart sind die mehreren Klemmelemente durch ein gemeinsames Betätigungselement betätigbar. Dadurch können mehrere Leitungen durch Drehen des gemeinsamen Betätigungselements gleichzeitig an das Anschlussstück angeschlossen werden. Der Aufwand für den Anschluss von Leitungen ist dadurch reduziert.

In einer Ausführungsart weist die Vorrichtung einen Klemmelementhalter auf, der in dem Betätigungselement beweglich angeordnet sein kann. In dem Klemmelementhalter sind das oder die Klemmelemente vorzugsweise symmetrisch in Bezug auf eine Längsachse der Vorrichtung angeordnet, die parallel zu den Längsachsen der anzuschließenden Leitungen verlaufen kann. Vorzugsweise ist der Klemmelementhalter insgesamt im Wesentlichen achsensymmetrisch zu der Längsachse der Vorrichtung. Der Klemmelementhalter kann Bohrungen aufweisen, in welche die Klemmelemente einsetzbar sind. Die Bohrungen für die Aufnahme der Klemmelemente können mindestens abschnittsweise zylindrisch sein.

In einer Ausführungsart weist der Klemmelementhalter Anlagemittel auf, vorzugsweise kegelförmige Anlageflächen, die in Anlage an entsprechende Anlagemittel bringbar sind, insbesondere an entsprechende kegelförmige Anlageflächen des Klemmelements. Bei einer Relativbewegung zwischen Klemmelementhalter und Klemmelement insbesondere in Längsrichtung der Vorrichtung kommen die Anlagemittel des Klemmelementhalters in Anlage an die Anlagemittel des Klemmelements und bringen das Klemmelement in klemmende Anlage an die anzuschließende Leitung, insbesondere können Klemmzungen in Bezug auf die Längsachse der Vorrichtung radial ausgelenkt werden, um in Anlage an die anzuschließende Leitung gebracht zu werden.

In einer Ausführungsart ist das Klemmelement in dem Klemmelementhalter beweglich gelagert, insbesondere in Längsrichtung der Vorrichtung beweglich gelagert. Durch diesen Bewegungsspielraum des Klemmelements innerhalb des Klemmelementhalters ist die klemmende Anlage des Klemmelements an der anzuschließenden Leitung aufhebbar. Hierzu können das Klemmelement und der Klemmelementhalter miteinander korrespondierende Mitnehmermittel aufweisen, die beispielsweise auch bei einem Lösen des Anschlusses und dem dadurch bedingten Zurückziehen des Klemmelementhalters eine Bewegungskopplung zwischen Klemmelementhalter und Klemmelement bewirken, durch welche die klemmende Anlage des Klemmelements an der anzuschließenden Leitung aufgehoben wird.

In einer Ausführungsart ist das Klemmelement unverlierbar in dem Klemmelementhalter festgelegt. Hierzu kann das Klemmelement federelastisch auslenkbare Rastzungen aufweisen, die in entsprechende Ausnehmungen im Klemmelementhalter einrastbar sind. Vorzugsweise sind die Rastflächen so ausgebildet, dass die Festlegung des Klemmelements an dem Klemmelementhalter nicht oder jedenfalls nicht zerstörungsfrei möglich ist.

In einer Ausführungsart ist der Klemmelementhalter unverlierbar an dem Betätigungselement festgelegt. Hierzu können der Klemmelementhalter und/oder das Betätigungselement miteinander in Eingriff bringbare Rastmittel aufweisen. Die Rastflächen können so ausgestaltet sein, dass eine einmal vorgenommene Festlegung nicht oder jedenfalls nicht zerstörungsfrei aufhebbar ist.

In einer Ausführungsart weist die Vorrichtung mehrere Klemmelemente auf, die in einem gemeinsamen Klemmelementhalter angeordnet sind, insbesondere in der vorstehend beschriebenen Weise angeordnet sind. Beim Anschließen muss das Betätigungselement nur mit dem gemeinsamen Klemmelementhalter zusammenwirken und dieser wiederum bewirkt eine klemmende Anlage aller in ihm aufgenommenen Klemmelemente an die jeweils zugehörige anzuschließende Leitung.

In einer Ausführungsart weist die Vorrichtung ein federelastisch verformbares Arretierungselement auf, insbesondere eine Schraubenfeder, mittels welcher der Zustand, in dem die anzuschließende Leitung an das Anschlussstück angeschlossen ist, arretierbar ist. Durch die federelastische Verformung wird eine Vorspannung oder Vorhaltekraft aufgebracht, durch welche ein unbeabsichtigtes Lösen des Anschlusses beispielsweise in Folge von Maschinenvibrationen zuverlässig verhindert ist.

Das Arretierungselement kann sich hierzu mit einem Ende an dem Anschlussstück abstützen und mit dem anderen Ende an dem Betätigungselement oder vorzugsweise an dem Klemmelementhalter. Die durch das Arretierungselement aufgebrachte Arretierungskraft wirkt dabei einer Axialbewegung des Betätigungselements in Richtung auf das Anschlussstück entgegen. Beim Anschließen der Leitung muss diese Arretierungskraft zunächst überwunden werden und bei geeigneter Ausbildung der Steuerkurve unter Bildung einer Rastflanke kann durch das Arretierungselement ein auch spürbares Einrasten erfolgen, sodass die den Anschluss bewirkende Position des Betätigungselements signalisierbar ist und auch haptisch erfasst werden kann.

In einer Ausführungsart ist das Arretierungselement unverlierbar an der Vorrichtung angeordnet, beispielsweise unverlierbar an einem Klemmelementhalter angeordnet. Das Arretierungselement kann in eine Sacklochbohrung oder Durchgangsbohrung des Klemmelementhalters eingepresst sein.

In einer Ausführungsart können alle Elemente der Vorrichtung unverlierbar miteinander verbunden sein, sodass die Montage der Vorrichtung an einem Anschlussstück besonders einfach möglich ist, auch unter beengten Platzverhältnissen. In einer weiteren Ausgestaltung kann auch die Vorrichtung selbst unverlierbar an dem Anschlussstück festlegbar sein, beispielsweise indem die Vorrichtung, insbesondere der Klemmelementhalter, und das Anschlussstück miteinander in Eingriff bringbare Rastmittel aufweisen, die beim erstmaligen Zusammenführen der Vorrichtung mit dem Anschlussstück miteinander verrasten. Die Rastmittel können dabei derart ausgebildet sein, dass ein Lösen der unverlierbaren Verbindung nicht oder jedenfalls nicht ohne Spezialwerkzeug möglich ist.

Weitere Vorteile, Merkmale und Einzelheiten der Erfindung ergeben sich aus den Unteransprüchen sowie der nachfolgenden Beschreibung, in der unter Bezugnahme auf die Zeichnung mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Explosionsdarstellung eines Ausführungsbeispieles,
- Fig. 2: zeigt eine Explosionsdarstellung des Ausführungsbeispiels der Fig. 1 aus einer anderen Perspektive,
- Fig. 3: zeigt einen Schnitt durch das Ausführungsbeispiel der Fig. 1,
- Fig. 4: zeigt einen Schnitt auf eine Draufsicht des Ausführungsbeispiels der Fig. 1 und
- Fig. 5: zeigt einen Schnitt durch ein weiteres Ausführungsbeispiel.

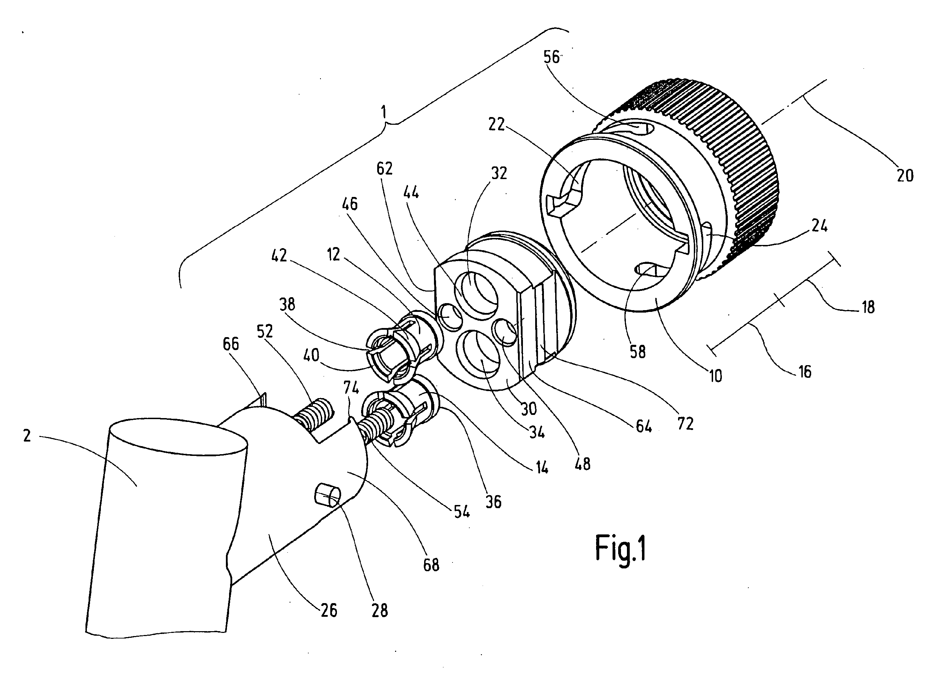

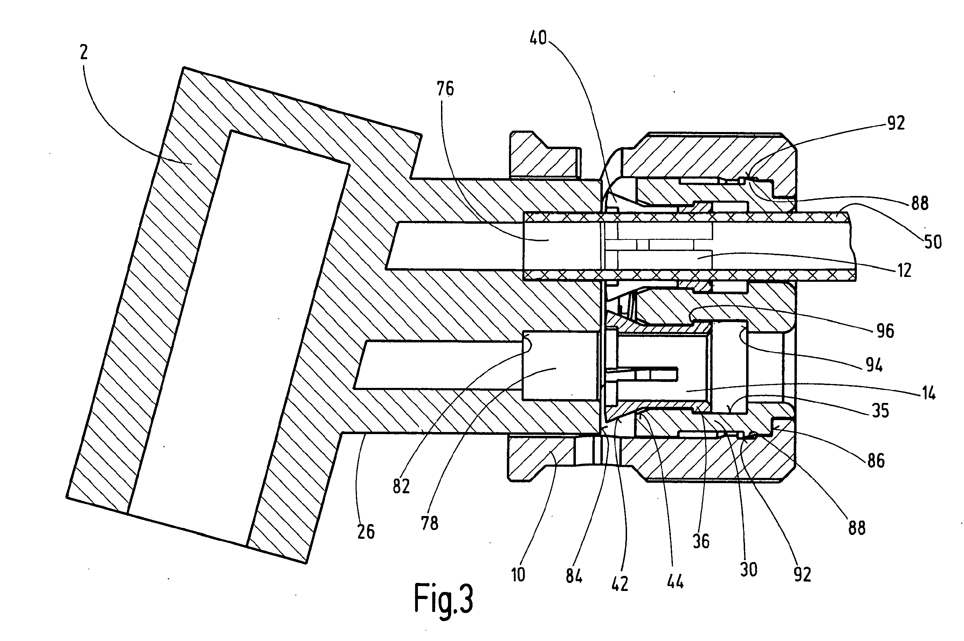

Die Fig. 1 zeigt eine Explosionsdarstellung eines Ausführungsbeispieles einer Vorrichtung 1 zum Anschluss einer röhrenartigen Leitung 50 (Fig. 3), insbesondere einer Schlauchleitung, an ein Anschlussstück 2. Mit dem dargestellten Ausführungsbeispiel sind zwei Leitungen an das Anschlussstück 2 anschließbar. Die Vorrichtung 1 weist ein Betätigungselement 10 auf und zwei Klemmelemente 12, 14 zum lösbaren Klemmen jeweils einer anzuschließenden Leitung.

Das Betätigungselement 10 weist an seinem dem Anschlussstück 2 zugewandten Ende einen hülsenförmigen Abschnitt 16 auf sowie einen daran anschließenden gerändelten Abschnitt 18. An dem hülsenförmigen Abschnitt 16 sind in Bezug auf eine Längsachse 20 auf gegenüberliegenden Seiten an dem mantelförmigen Umfang insgesamt zwei Verschlussmittel 22, 24 angeordnet. Dabei handelt es sich um Nuten, die abschnittsweise schraubenlinienförmig verlaufen und in die Mantelfläche des hülsenförmigen Abschnitts 16 eingebracht sind. Die Nuten sind jeweils an der dem Anschlussstück 2 zugewandten Ende offen. Dadurch kann das Betätigungselement 10 in der dargestellten Winkelposition auf den stutzenförmigen Abschnitt 26 aufgesteckt werden, wobei ein dort angeordnetes Verschlussmittel 28 in die Nuten des Betätigungselements 10 eintritt und bei einer Relativdrehung des Betätigungselements 10 gegenüber dem Anschlussstück 2 um die Längsachse 20 wird die Drehbewegung in eine Axialbewegung umgesetzt und somit das Betätigungselement 10 und mithin die Vorrichtung 1 und das Anschlussstück 2 axial zueinander bewegt. Insbesondere kann auf diese Weise die anzuschließende Leitung in der Vorrichtung 1 fixiert werden und durch das Festlegen der Vorrichtung 1 an das Anschlussstück 2 wird die anzuschließende Leitung auch an dem Anschlussstück 2 festgelegt.

Die beiden Klemmelemente 12, 14 der Vorrichtung 1 sind in einem gemeinsamen Klemmelementhalter 30 angeordnet, der hierzu zwei in Bezug auf die Längsachse 20 einander gegenüberliegende und jeweils mindestens abschnittsweise zylindrische Bohrungen 32, 34 aufweist. Die Klemmelemente 12, 14 sind unverlierbar in dem Klemmelementhalter 30 festgelegt. Hierzu weisen die Klemmmittel 12, 14 an oder nahe ihrem dem Klemmelementhalter 30 zugewandten Ende federelastisch auslenkbare Rastmittel 36 auf, die in einen entsprechenden Hinterschnitt der Bohrungen 32, 34 einclipsbar sind.

Die im Wesentlichen hülsenförmigen Klemmmittel 12, 14 weisen auf ihrer Mantelfläche parallel zur Längsachse 20 verlaufende und dem Anschlussstück 2 zugewandten Ende hin offene Schlitze 38 auf, durch die radial auslenkbare Federzungen 40 gebildet sind. Im dargestellten Ausführungsbeispiel sind die beiden Klemmmittel 12, 14 identisch aufgebaut und weisen jeweils vier Klemmzungen 40 auf. Die Klemmzungen 40 bilden auf ihrer Außenseite nahe oder an ihrem dem Klemmelementhalter 30 abgewandten Ende erste Anlagemittel 42 aus, im Ausführungsbeispiel eine sich kegelförmig aufweitende Mantelfläche. Diese ersten Anlagemittel 42 korrespondieren mit zweiten Anlagemitteln 44 des Klemmelementhalters 30, die im Ausführungsbeispiel an einem dem Anschlussstück 2 zugewandten Ende der Bohrungen 32, 34 angeordnet und als kegelförmige Flächen ausgebildet sind.

Da nach dem Einclipsen der Klemmmittel 12, 14 in den Klemmmittelhalter 30 eine axiale Beweglichkeit der Klemmmittel 12, 14 in den Bohrungen 32, 34 verbleibt, kommt es bei einer axialen Bewegung der Klemmmittel 12, 14 gegenüber dem Klemmmittelhalter 30 in von dem Anschlussstück 2 wegweisender Richtung zu einer Anlage der ersten und zweiten Anlagemittel 42, 44 aneinander und im weiteren Verlauf zu einem Auslenken der Klemmzungen 40 nach radial innen und dadurch zu einem Klemmen der durch die Klemmmittel 12, 14 hindurchtretenden anzuschließenden Leitung 50 (Fig. 3).

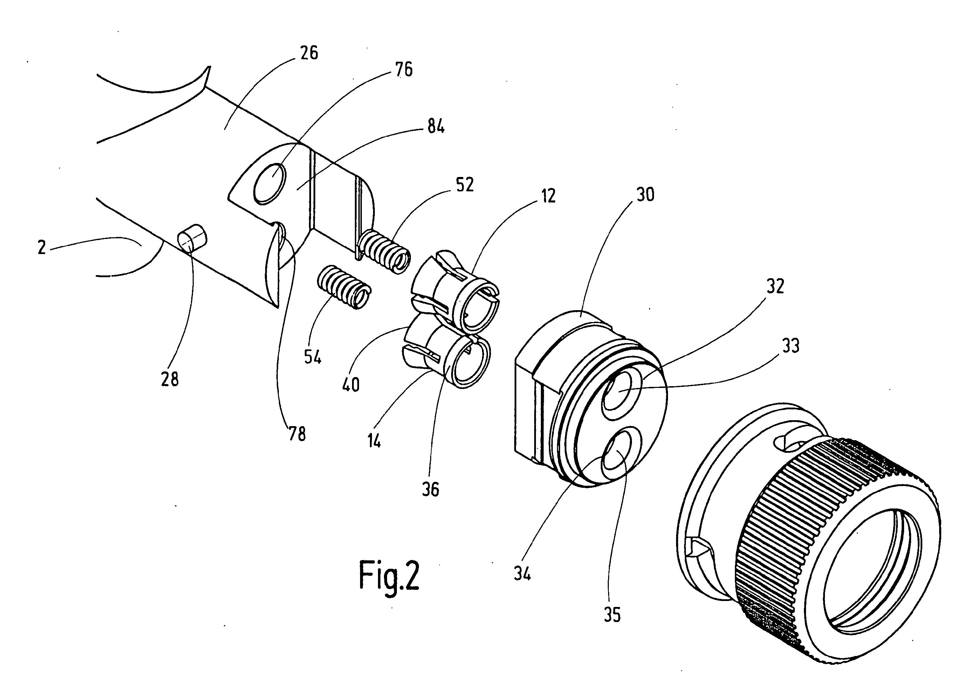

Der Klemmelementhalter 30 weist im Ausführungsbeispiel symmetrisch in Bezug auf die Längsachse 20 einander gegenüberliegende weitere Bohrungen 46, 48 auf, die als Sacklochbohrungen oder auch Durchgangsbohrung in dem Klemmmittelhalter 30 ausgebildet sind. In jeder dieser weiteren Bohrungen 46, 48 ist jeweils ein federelastisch verformbares Arretierungselement 52, 54 eingepresst, das im Ausführungsbeispiel als Schraubenfeder ausgebildet ist. Bei einem die Leitungen anschließenden Drehen des Betätigungselements 10 wird das Betätigungselement 10 durch den erfindungsgemäßen Bajonettverschluss zusammen mit dem Klemmelementhalter 30 und damit auch zusammen mit den Arretierungselementen 52, 54 in Richtung auf das Anschlussstück 2 bewegt. Im Verlauf dieser Relativbewegung kommen die Arretierungselemente 52, 54 in Anlage an den stutzenförmigen Abschnitt 26, insbesondere an eine vorzugsweise mindestens abschnittsweise plane Stirnfläche 84 (Fig. 2) des stutzenförmigen Abschnitts 26, und wirken der weiteren Drehbewegung des Betätigungselements 10 entgegen. Wird diese Gegenkraft durch weiteres Drehen überwunden, bis das Verschlussmittel 28 des Anschlussstücks 26 in die Rastvertiefung 56, 58 des Verschlussmittels 22, 24 einrastet, ist die dann eingenommene und die Leitungen 50 an das Anschlussstück 2 anschließende Position der Vorrichtung 1 zuverlässig gegen unbeabsichtigtes oder unerwünschtes Lösen, beispielsweise aufgrund von Vibrationen, durch die Federvorspannung der Arretierungselemente 52, 54 gesichert.

Das Anschlussstück 2 kann auf unterschiedlichste Weise entsprechend dem jeweiligen Anwendungsfall ausgestaltet sein, insbesondere hinsichtlich der Weiterführung der angeschlossenen Leitung 50. So können beispielsweise mehrere angeschlossene Leitungen 50 zu einer gemeinsamen Leitung zusammengeführt und weitergeführt werden.

Der Klemmelementhalter 30 weist auf seiner Mantelfläche zwei einander in Bezug auf die Längsachse 20 gegenüberliegende Abflachungen 62, 64 auf, durch die ein Eingriff von Schenkeln 66, 68 des Anschlussstücks 2 in die Vorrichtung 1 möglich ist. Auf den Abflachungen 62, 64 bildet der Klemmelementhalter 30 erste Rastmittel 72 aus, die mit an den Schenkeln 66, 68 angeordneten zweiten Rastmitteln 74 in Eingriff bringbar sind, sodass die Vorrichtung 1 beim erstmaligen Zusammenführen mit dem Anschlussstück 2 mit diesem verrastend verbindbar ist, insbesondere unverlierbar an dem Anschlussstück 2 festlegbar ist, nämlich auf das Anschlussstück 2 aufclipsbar ist.

Die Fig. 2 zeigt eine Explosionsdarstellung des Ausführungsbeispiels der Fig. 1, diesmal aus einer Perspektive in Blickrichtung auf das Anschlussstück 2. In eine Stirnfläche 84 des stutzenförmigen Abschnitts 26, die gegenüber den beiden Schenkeln 66, 68 zurückversetzt ist, sind zwei Bohrungen 76, 78 eingebracht, in welche jeweils eine der anzuschließenden Leitungen 50 einsteckbar ist.

Einer der die Klemmzungen 40 der Klemmmittel 12, 14 bildenden Schlitze 38 verläuft durchgehend über die gesamte axiale Länge, sodass die Klemmmittel 12, 14 zum Festlegen an dem Klemmelementhalter 30 in Umfangsrichtung federelastisch verformbar sind und in die Bohrungen 32, 34 (Fig. 1) einsteckbar sind. Die Bohrungen 32, 34 weiten sich in einer von dem Anschlussstück 2 wegweisenden Richtung auf, sodass der das Rastmittel 36 durch radiale Aufweitung bildende Endabschnitt der Klemmelemente 12, 14 in den aufgeweiteten Abschnitt 33, 35 der Bohrung 32, 34 einclipsen kann und dadurch die Klemmelemente 12, 14 unverlierbar an dem Klemmelementhalter 30 festlegbar sind.

Die Fig. 3 zeigt einen Schnitt durch das Ausführungsbeispiel der Fig. 1 in einem Zustand, in dem die Vorrichtung 1 an dem Anschlussstück 2 angeordnet ist und eine Leitung 50 in die Vorrichtung 1 und in das Anschlussstück 2 eingesteckt ist, aber noch nicht klemmend verbunden ist. Die Bohrungen 76, 78 in dem stutzenförmigen Abschnitt 26 sind in diesem Ausführungsbeispiel als Stufenbohrung unter Ausbildung eines rechtwinkligen Absatzes 82 ausgebildet, an den das stirnseitige Ende der Leitung 50 in Anlage bringbar ist. Der Durchmesser des weiterführenden, verjüngten Abschnittes der Bohrungen 76, 78 ist dabei an die lichte Weite der Leitung 50 angepasst.

Im dargestellten Zustand sind die Leitungen 50 noch nicht geklemmt; mithin befindet sich das Betätigungselement 10 in seiner von dem Anschlussstück 2 fernen Endposition. Die Klemmelemente 12, 14 sind (noch) nicht in Anlage an der Stirnfläche 84 des stutzenförmigen Abschnitts 26. Der Klemmelementhalter 30 weist an seinem dem Anschlussstück 2 abgewandten Ende einen Absatz 86 auf und bildet dadurch eine Anlagefläche für das Betätigungselement 10, mittels dem dieses die durch die Drehbewegung und die damit verbundene Axialbewegung des Betätigungselements 10 gegenüber dem Anschlussstück 2 auftretende Schubkraft auf den Klemmelementhalter 30 überträgt und diesen in Richtung auf das Anschlussstück 2 bewegt. Der Klemmelementhalter 30 ist dabei mittels auf seiner Außenseite angeordneter Rastmittel 88, die in eine entsprechende Ausnehmung 92 der Innenwand des Betätigungselements 10 einrasten, unverlierbar mit dem Betätigungselement 10 verbunden. Das Rastmittel 88 wirkt dabei derart mit der Ausnehmung 92 zusammen, dass der Klemmelementhalter 30 von der zum Anschlussstück 2 offenen Seite in das Betätigungselement 10 einclipsbar ist.

Die Bohrungen 32, 34 im Klemmelementhalter 30 weisen an ihrem dem Anschlussstück 2 abgewandten Ende eine Aufweitung auf für ein vereinfachtes Einführen der anzuschließenden Leitung 50. Nach einem im Wesentlichen zylindrischen Verlauf erfolgt eine Aufweitung der Bohrungen 32, 34 unter Ausbildung eines Absatzes 94. Der aufgeweitete Abschnitt 35 erstreckt sich über eine axiale Länge, die größer ist als die axiale Erstreckung des Rastmittels 36 des Klemmmittels 12, 14, das in den aufgeweiteten Abschnitt 35 eingreift.

Im weiteren Verlauf in Richtung auf das Anschlussstück 2 verjüngt sich die Bohrung 32, 34 unter Ausbildung eines Absatzes 96. Daran schließt sich ein weiterer im Wesentlichen zylindrischer Abschnitt an, mittels dem die Klemmelemente 12, 14 in den Bohrungen 32, 34 axial beweglich geführt sind. An dem Ende, das dem Anschlussstück 2 zugewandt ist, sind die Bohrungen 32, 34 kegelförmig aufgeweitet unter Ausbildung der im Ausführungsbeispiel kegelförmigen zweiten Anlagemittel 44.

Kommt es durch Drehen des Betätigungselements 10 zu einer Axialbewegung in Richtung auf das Anschlussstück 2, so wird auch der Klemmelementhalter 30 in Richtung auf das Anschlusselement 2 bewegt, bis die zweiten Anlagemittel 44 in Anlage an die ersten Anlagemittel 42 kommen und zunächst die Klemmelemente 12, 14 in Richtung auf das Anschlussstück 2 schieben, bis die Klemmmittel 12, 14 in Anlage an die Stirnfläche 84 kommen. Bei einem weiteren axialen Verschieben kommt es durch die Anlage der ersten und zweiten Anlagemittel 42, 44 zu einem Auslenken der Klemmzungen 40 nach radial innen und damit zu einem Klemmen der anzuschließenden Leitung 50 an der Vorrichtung 1.

Beim Lösen des Betätigungselements 10 wird dieses zunächst von dem Anschlussstück 2 wegbewegt und nimmt dabei nach einem Leerhub aufgrund des Eingriffs des Rastmittels 88 in die Ausnehmung 92 auch den Klemmelementhalter 30 mit. Aufgrund des Eingriffs des Rastmittels 36 in den aufgeweiteten Abschnitt der Bohrung 32, 34 werden auch die Klemmelemente 12, 14 zurückgezogen und dadurch die angeschlossene Leitung freigegeben.

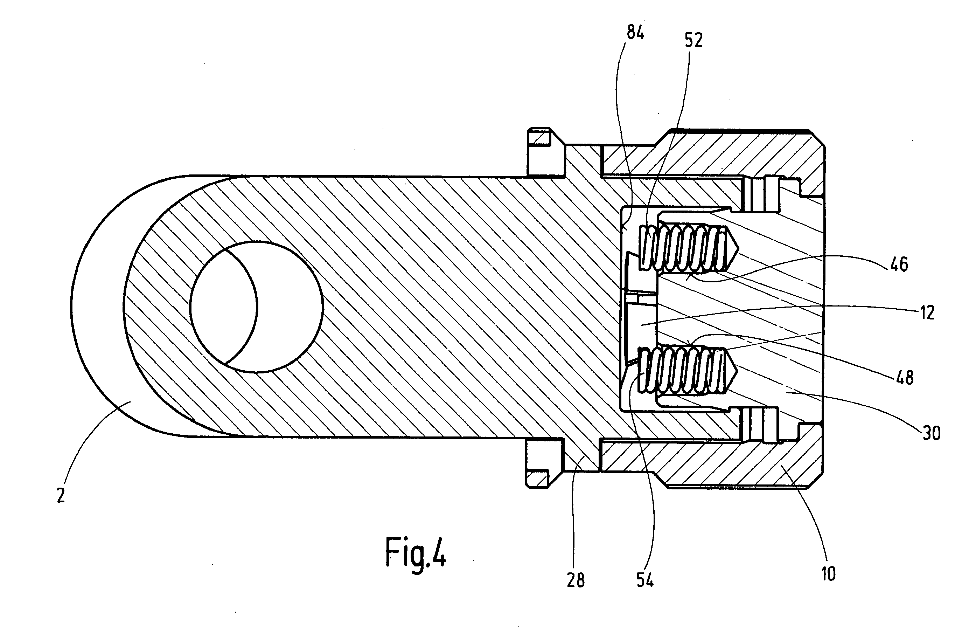

Die Fig. 4 zeigt einen Schnitt auf eine Draufsicht des Ausführungsbeispiels der Fig. 1. Die in den Klemmelementhalter 30 eingebrachten weiteren Bohrungen 46, 48 sind als Sacklochbohrungen ausgebildet, die insbesondere an ihrem sacklochartigen Ende einen verjüngten Abschnitt aufweisen, mittels dem die Arretierungselemente 52, 54 in den Bohrungen 46, 68 eingepresst sind und damit an dem Klemmelementhalter 30 festgelegt sind. In der dargestellten Position sind die anzuschließenden Leitungen 50 noch nicht geklemmt. Vielmehr wird bei einem weiteren Drehen des Betätigungselements 10 zunächst das Klemmelement 12 in Anlage an die Stirnfläche 84 des Anschlussstücks 2 kommen und anschließend in den Klemmelementhalter 30 hineingeschoben werden, sodass auch die Arretierungselemente 52, 54 in Anlage an die Stirnfläche 84 kommen. Bei einem weiteren Drehen des Betätigungselements 10 bis zur Endposition werden die Arretierungselemente 52, 54 zusammengedrückt, sodass diese eine Vorspannung auf den Klemmelementhalter 30 und mithin auf das Betätigungselement 10 ausüben.

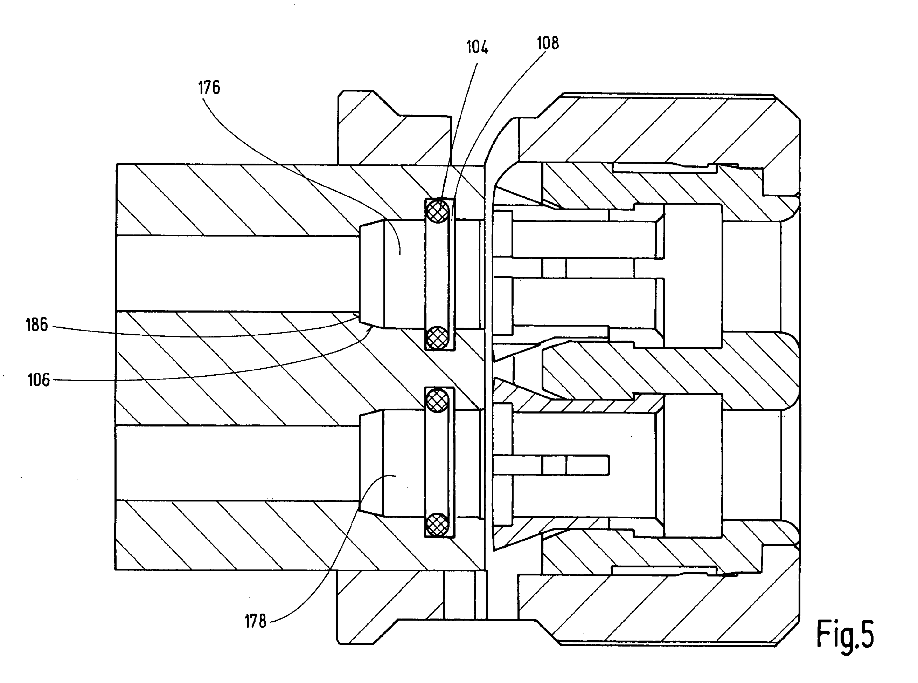

Die Fig. 5 zeigt einen Schnitt durch ein weiteres Ausführungsbeispiel, bei dem die Bohrungen 176, 178 im Bereich des Übergangs von dem die anzuschließende Leitung aufnehmenden Abschnitt zu dem weiterführenden Abschnitt einen sich kontinuierlich verjüngenden Abschnitt aufweist, insbesondere einen kegelförmigen Abschnitt 106, durch den ein Anpressen der anzuschließenden Leitung 50 an die Wandung der Bohrung 176, 178 erfolgt, was zu einer Abdichtung führt. An dem sich verjüngenden Abschnitt 106 kann wiederum der Absatz 186 anschließen.

Alternativ oder ergänzend zu einer Abdichtung durch einen verjüngenden Abschnitt kann in der Bohrung 176, 178, insbesondere in dem die anzuschließende Leitung 50 aufnehmenden Abschnitt dieser Bohrung, ein Dichtmittel 104 eingelegt sein, beispielsweise ein handelsüblicher Dichtring. Hierzu kann der die anzuschließende Leitung 50 aufnehmende Abschnitt der Bohrung 176, 178 eine Ringnut 108 mit gegenüber der Bohrung 176, 178 größeren Durchmesser aufweisen, in welche das Dichtmittel 104 eingelegt wird. Das Dichtmittel 104 ist bei eingesteckter anzuschließender Leitung 50 in Anlage an der Außenumfangsfläche der Leitung 50.

## Patentansprüche

1. Vorrichtung (1) zum Anschließen einer röhrenartigen Leitung (50), insbesondere einer Schlauchleitung, an ein Anschlussstück (2), wobei die Vorrichtung (1) ein Betätigungselement (10) und ein Klemmelement (12, 14) zum lösbaren Klemmen der anzuschließenden Leitung (50)aufweist, **dadurch gekennzeichnet, dass** das Betätigungselement (10) ein Verschlussmittel (22, 24) aufweist, das zusammen mit einem korrespondierenden Verschlussmittel (28) des Anschlussstücks (2) einen Bajonettverschluss bildet, und dass durch Drehen des Betätigungselements (10) der Bajonettverschluss schließbar ist und dabei das Klemmelement (12, 14) in klemmende Anlage an die anzuschließende Leitung (50) bringbar ist.

2. Vorrichtung (1) nach Anspruch 1, **dadurch gekennzeichnet, dass** das Betätigungselement (10) einen hülsenförmigen Abschnitt (16) zur Verbindung mit dem Anschlussstück (2) aufweist, und dass das Verschlussmittel (22, 24) des Betätigungselements (10) im Bereich des hülsenförmigen Abschnitts (16) angeordnet ist.

3. Vorrichtung (1) nach Anspruch 1 oder 2, **dadurch gekennzeichnet, dass** das Verschlussmittel (12, 14) des Betätigungselements (10) als Steuerkurve ausgebildet ist, die beim Drehen des Betätigungselement (10) mit dem korrespondierenden Verschlussmittel (28) des Anschlussstücks (2) derart zusammenwirkt, dass die Drehbewegung in eine Axialbewegung des Betätigungselements (10) und damit der Vorrichtung (1) gegenüber dem Anschlussstück (2) umsetzbar ist.

4. Vorrichtung (1) nach einem der vorangehenden Ansprüche, **dadurch gekennzeichnet, dass** die Vorrichtung (1) mehrere Klemmelemente (12, 14) aufweist zum lösbaren Klemmen mehrerer an das Anschlussstück (2) anschließbarer Leitungen (50).

5. Vorrichtung (1) nach Anspruch 4, **dadurch gekennzeichnet, dass** die mehreren Klemmelemente (12, 14) durch ein gemeinsames Betätigungselement (10) betätigbar sind.

6. Vorrichtung (1) nach einem der vorangehenden Ansprüche, **dadurch gekennzeichnet, dass** die Vorrichtung (1) einen Klemmelementhalter (30) aufweist, in dem das Klemmelement (12, 14) angeordnet ist.

7. Vorrichtung (1) nach Anspruch 6, **dadurch gekennzeichnet, dass** der Klemmelementhalter (30) und das Klemmelement (12, 14) miteinander korrespondierende Anlagemittel (42, 44) aufweisen, durch die das Klemmelement (12, 14) bei einer Relativbewegung zwischen Klemmelementhalter (30) und Klemmelement (12, 14) in klemmende Anlage an die anzuschließende Leitung (50) bringbar ist.

8. Vorrichtung (1) nach Anspruch 6 oder 7, **dadurch gekennzeichnet, dass** der Klemmelementhalter (30) unverlierbar an dem Betätigungselement (10) festgelegt ist, insbesondere in das Betätigungselement (10) eingeclipst ist.

9. Vorrichtung (1) nach einem der Ansprüche 6 bis 8, **dadurch gekennzeichnet, dass** das Klemmelement (12, 14) unverlierbar in dem Klemmelementhalter (30) festgelegt ist, insbesondere in den Klemmelementhalter (30) eingeclipst ist.

10. Vorrichtung (1) nach einem der vorangehenden Ansprüche, **dadurch gekennzeichnet, dass** die Vorrichtung (1) mehrere Klemmelemente (12, 14) aufweist, die in einem gemeinsamen Klemmelementhalter (30) angeordnet sind.

11. Vorrichtung (1) nach einem der vorangehenden Ansprüche, **dadurch gekennzeichnet, dass** die Vorrichtung (1) ein federelastisch verformbares Arretierungselement (52, 54) aufweist, insbesondere eine Schraubenfeder, mittels welcher der Zustand, in dem die anzuschließende Leitung (50) an das Anschlussstück (2) angeschlossen ist, arretierbar ist.

12. Vorrichtung (1) nach Anspruch 11, **dadurch gekennzeichnet, dass** das Arretierungselement (52, 54) unverlierbar an der Vorrichtung (1) angeordnet ist, insbesondere unverlierbar an einem das Klemmelement (12, 14) aufnehmenden Klemmelementhalter (30) angeordnet ist.

13. Vorrichtung (1) nach einem der vorangehenden Ansprüche, **dadurch gekennzeichnet, dass** die Vorrichtung (1) unverlierbar an dem Anschlussstück (2) festlegbar ist, insbesondere auf das Anschlussstück (2) aufclipsbar ist.
